Europäisches Patentamt

European Patent Office

Office européen des brevets

(11) Veröffentlichungsnummer: **0 211 106**
**A2**

(12) # EUROPÄISCHE PATENTANMELDUNG

(21) Anmeldenummer: 85116516.7

(22) Anmeldetag: 23.12.85

(51) Int. Cl.⁴: **B 23 B 51/02**

(30) Priorität: 03.08.85 DE 3527934

(43) Veröffentlichungstag der Anmeldung:
25.02.87 Patentblatt 87/9

(84) Benannte Vertragsstaaten:
CH DE FR GB IT LI SE

(71) Anmelder: HAWERA Präzisionswerkzeuge GmbH
Wangener Str. 133
D-7980 Ravensburg(DE)

(72) Erfinder: Scheuch, Anton
Kalter Knebel 51
D-7980 Ravensburg(DE)

(74) Vertreter: Patentanwälte Dipl.-Ing. E. Eisele Dr.-Ing. H. Otten
Seestrasse 42
D-7980 Ravensburg(DE)

(54) Mehrlippenbohrer.

(57) Es wird ein Mehrlippenbohrer vorgeschlagen, bei welchem zur Vergrößerung des Spanraumes eine zusätzliche Hilfsspannut im Kernbereich eines oder mehreren Hauptspannuten angeordnet ist.

EP 0 211 106 A2

Anmelderin:    HAWERA Präzisonswerkzeuge GmbH
Wangener Straße 133
7980 Ravensburg

amtl. Bez.:    "Mehrlippenbohrer"

Die Erfindung betrifft einen Mehrlippenbohrer, insbesondere Bohrer mit drei Schneidlippen, vorzugsweise zur Bearbeitung von Leiterplatten, Kunststoffen oder Metallen.

Mehrlippenbohrer werden auch als Mehrschneidenbohrer bezeichnet. Der Vorteil derartiger Bohrwerkzeuge liegt in der erhöhten Anzahl von Schneiden und damit in einer erhöhten Bohrleistung besonders in speziellen Materialien.

Bei Bohrern ist es bekannt, daß die Größe der Spannut mitverantwortlich ist für den Vorschubdruck, d. h. eine Spannut mit großem Querschnitt im Verhältnis zum Querschnitt des Bohrwerkzeugs erzeugt einen niedrigeren Vorschubdruck, da das Spangut nur im Umfang dieses Nutenquerschnitts freibeweglich herausgelöst wird. Der über den Querschnitt der Spannut hinausgehende Bereich des abzutragenden Gutes in der Bohrung muß quasi zusätzlich durch den Querschnitt der Spannut hindurch gequetscht werden. Eine große Spannut kann deshalb bei geringerem Vorschubdruck größere Mengen an Spangut herausfördern. Bei niedrigem Vorschubdruck bleiben aber auch die Schnittkräfte und damit der Verschleiß am Bohrwerkzeug gering.

Ein Mehrlippenbohrer entsprechend dem Oberbegriff des Anspruchs 1 ist aus der deutschen Patentschrift 1 59 437 bekannt geworden, insbesondere eine Spiralnut, die eine zweite durchgehende Nut aufweist. Diese zweite Nut hat die Aufgabe, ein leichteres Abführen der Späne bei Spiralbohrern zu ermöglichen. Zur Verbesserung dieser Aufgabe wird gemäß dieser Druckschrift vorgeschlagen, daß sich die Hilfsnut von der Spitze zum Schaft hin
allmählich verbreitert.

Gemäß den weiterhin bekannten Druckschriften DE-AS 10 17 438
oder FR-PS 536 208 sind weitere Hilfsnuten in Hauptspannuten bekannt geworden, die jedoch die Aufgabe haben, den Span derart
abzubiegen, daß dieser bricht. Eine Vergrößerung des Spanraums
zur leichteren Abführung der Späne ist hiermit nicht bezweckt.

Der Erfindung liegt die Aufgabe zugrunde, ein Bohrwerkzeug der
eingangs erwähnten Art derart auszubilden, daß der erforderliche
Vorschubdruck noch weiter verringert wird und damit die Schnittkräfte bzw. Schnittkraftmomente reduziert werden.

Diese Aufgabe wird erfindungsgemäß dadurch gelöst, daß in einer
Hauptspannut eines drei-schneidigen Mehrlippenbohrers eine
Hilfsspannut derart eingebracht ist, daß sich die Tiefe der
Hilfsspannut bis etwa zur Mittelachse des Bohrers hin erstreckt.

Der Erfindung liegt die Erkenntnis zugrunde, daß eine Erhöhung
des Querschnitts der Spannut auch eine Verringerung des Vorschubdrucks und damit eine Verringerung der Schnittkräfte zur
Folge hat. Die Vergrößerung der Spannut läßt sich jedoch nicht
ohne weiteres durchführen, da die Schneidengeometrie bzw. die
Geometrie der Spannuten bei derartigen Bohrwerkzeugen technisch
bedingt vorgegeben ist. Die Spannuten werden deshalb mit einem
vorgegebenen, gleichbleibenden Krümmungsradius spiralförmig
eingebracht. Dies hat zur Folge, daß im Kernbereich des Bohrwerkzeugs eine Verbreiterung des Steges der jeweiligen Schneide
auftritt.

Die Werkzeuggeometrie wird nun erfindungsgemäß dadurch verbessert, daß in einer Spannut des Mehrlippenbohrers im Bereich des Bohrerkerns, d. h. im Bereich der Spannut, welcher der Bohrerachse am nächsten liegt, eine zusätzliche Hilfsspannut eingebracht wird, die bis, oder nahezu bis zur Mittelachse sich erstreck. Die Hauptspannut erhält deshalb in ihrem tiefsten Bereich eine zusätzliche Hilfsspannut mit kleinerem Krümmungsradius als derjenige der Hauptspannut.

Gegenüber den bekannten Bohrwerkzeugen mit Hilfsnuten hat der erfindungsgemäße Mehrlippenbohrer die nachstehend aufgezeigten Vorteile.

Dadurch daß die Hilfsspannut nahezu bis zur Mittelachse reicht, wird der volle Bohrquerschnitt bei jeder Umdrehung des Bohrwerkzeugs von einer Schneidkante erfaßt. Der Vorschub verringert sich demnach entscheidend, da genügend Querschnitt zum vollständigen Materialtransport vorhanden ist. Besonders wichtig hierbei ist, daß auch das Material im Bereich der Mittelachse des Bohrwerkzeugs durch eine Schneidkante abgetragen wird und nicht wie üblich, durch die weiter außen liegenden Spannuten hindurchgequetscht werden muß.

Dadurch daß die Hilfsspannut nicht bis zur Mittelachse unmittelbar reicht, bleibt eine Zentrierspitze des Bohrwerkzeugs gewahrt. Kern der Erfindung ist es jedoch, die Hilfsspannut möglichst bis zur Mittelachse reichen zu lassen, um Material in diesem Bereich mit niedrigen Schnittkräften wegtransportieren zu können.

Bei elastischen Materialien wie Harze, Laminate usw. erfährt das elastische Material von den symmetrischen Querschneiden einen Pressdruck, der dieses leicht verformt. Das Material kann sich jedoch in die Hilfsnut entlasten und wird von der Hilfsnutschneide voll abgetragen.

Bei der Bearbeitung von nicht elastischen Materialien, wie Metall, müssen die symmetrischen Querschneiden gegenüber der Hilfsnutschneide geringfügig axial zurückversetzt sein, damit stets die Hilfsnutschneide im inneren Querschnittsbereich wirksam ist. Die Hilfsnutschneide muß deshalb immer oberster Punkt des Bohrwerkzeugs sein.

Gemäß der Erfindung ist es weiterhin vorteilhaft, daß nur eine Hilfsspannut in einem Mehrlippenbohrer vorhanden ist, da nur eine Hilfsspannut bis nahezu zur Mittelachse reichen kann, ohne daß die übrigen Stegquerschnitte entscheidend geschwächt sind.

Bei dem erfindungsgemäßen Mehrlippenbohrer sind die Schnittkräfte um das 2 bis 2,5-fache niedriger als bei bekannten Mehrlippenbohrer, infolge des geringeren Vorschubdrucks und damit der höheren Transportfähigkeit von Bohrklein bzw. durch eine erhöhte Transportleistung bei gleichem Vorschubdruck. Durch den charakteristischen unsymmetrischen Aufbau des erfindungsgemäßen Mehrlippenbohrers sind keine Nachteile hinsichtlich der Schwingungseigenschaften bekannt geworden. Versuche haben vielmehr gezeigt, daß die Bohrergebnisse infolge der weit bis in die Mitte hineinreichenden Schneidkante der Hilfsspannut hervorragend sind.

Weitere erfindungswesentliche Merkmale und Vorteile ergeben sich aus den Unteransprüchen sowie aus dem nachfolgenden, anhand der Zeichnung näher erläuterten Ausführungsbeispiel. Es zeigen

Fig. 1   eine Seitenansicht des erfindungsgemäßen Mehrlippenbohrers,

Fig. 2   eine Drehung des Bohrers nach Fig. 1 um 90° und

Fig. 3   einen Querschnitt durch das erfindungsgemäße Bohrwerkzeug.

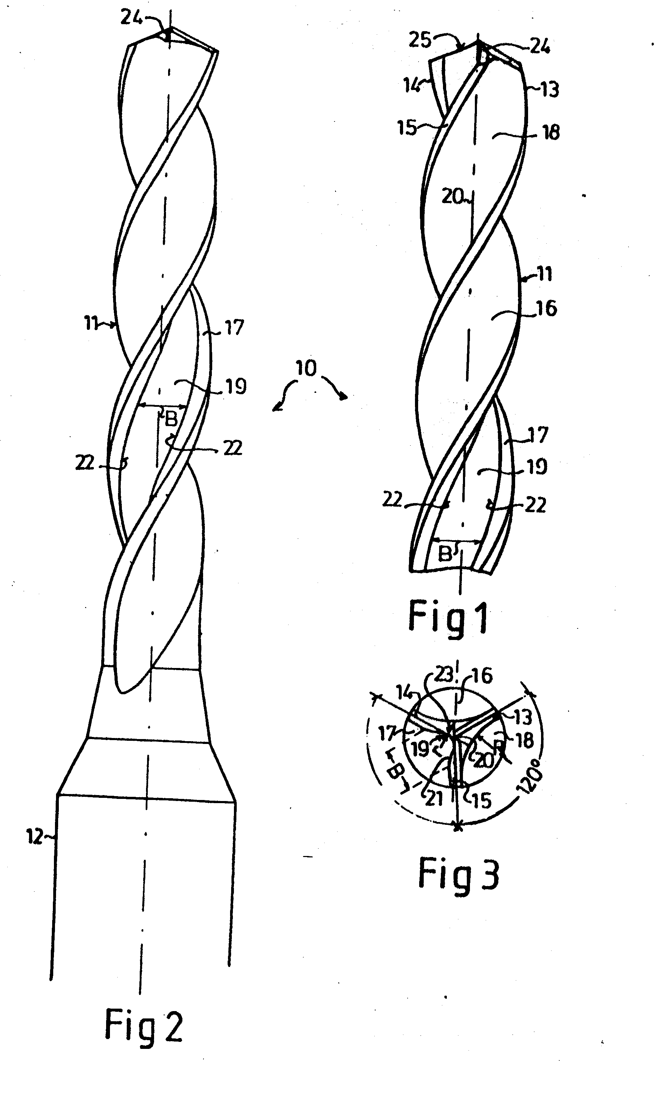

Der in den Figuren 1 und 2 in Seitenansicht dargestellte Mehrlippenbohrer 10 besteht aus dem Schneidteil 11 sowie dem Einspannschaft 12. Das spiralförmige Schneidteil 11 ist entsprechend der Darstellung nach Fig. 3 als 3-Lippenbohrer mit den drei Stegen 13, 14, 15 ausgebildet. Zwischen diesen Stegen 13 bis 15 befinden sich die Spannuten 16, 17, 18.

Erfindungsgemäß wird nun in eine der Spannuten eine zusätzliche Hilfsspannut 19 eingebracht. Der Radius r der Hilfsspannut 19 ist erheblich kleiner als der Radius R der Spannuten 16, 18. Das Verhältnis r : R beträgt etwa 1 : 3 bis 1 : 4, d. h. r beträgt deshalb ca. 1/3 bis 1/4 von R. Im Ausführungsbeispiel ist die Hilfsspannut 19 in den Grund der Spannut 17 derart eingearbeitet, daß ihre Tiefe bis oder nahezu bis zur Mittelachse 20 des Bohrwerkzeuges reicht um ein Werkstückabtrag auch in diesem Bereich zu ermöglichen. Die Tiefe dieser zusätzlichen Hilfsspannut wird auch dadurch bestimmt, daß die Stegbreiten der Stege 13 bis 15 zum Mittelpunkt hin nicht wesentlich zunehmen, jedoch durch die Tiefe der Hilfsspannut 19 auch nicht wesentlich geschwächt werden. Erfindungsgemäß erstreckt sich deshalb die Tiefe der Hilfsnut bis etwa zur Mittelachse 20 oder knapp davor. Letzteres, um eine Zentrierspitze beizubehalten. Die Hilfsnut sollte sich bis ca. 1/10 des Bohrerdurchmessers vor der Mittelachse 20 des Bohrers erstrecken, d. h. bei einem Bohrer mit 1 mm Durchmesser bis ca. 1/10 mm vor der Mittelachse 20.

Erfindungsgemäß ist der Querschnitt der Hilfsspannut 19 kreisbogenförmig ausgebildet mit einem Radius r der wesentlich kleiner ist als der gleichbleibende Radius R der Hauptspannut 16 bis 18. Der Übergangsbereich 21 zwischen Hilfsspannut 19 und Hauptspannut 17 wird sanft und ohne Ecken zur Vermeidung von Spannungsspitzen und zur Vergrößerung des Spanraums ausgeführt. Die in den Figuren 1 und 2 symbolisch dargestellte Breite B der Hilfsspannut 19 innerhalb der Hauptspannut 17 entspricht etwa dem Ende des Übergangsbereichs 21 zwischen den beiden Nuten 19, 17. Die in den

Figuren 1 und 2 dargestellte Übergangskante 22 soll den Übergang bzw. den Beginn der Hilfsspannut 19 andeuten. Tatsächlich ist dies jedoch ein abgerundeter Übergang.

Der erfindungsgemäße Mehrlippenbohrer eignet sich besonders zur Bearbeitung von elastischen Werkstoffen wie Harze, Laminate, insbesondere zur Bearbeitung von Leiterplatten. Hier werden Durchmesserbereiche des Bohrwerkzeugs von 0,4 bis 3 mm verwendet. Besonders schwierig ist die Beherrschbarkeit des Bohrwerkzeugs im Bereich von 0,4 bis 0,8 mm Durchmesser. Beim Einsatz des erfindungsgemäßen Bohrwerkzeugs in diesen kleinen Durchmesserbereichen, soll die Hilfsnut 19 möglichst bis zur Achsenmitte 20 verlaufen, um Material in diesem Bereich mit niedrigen Schnittkräften zu bohren. Das elastische Material erfährt dabei von den symmetrischen Querschneiden 24 der Hauptschneiden einen Pressdruck und verformt sich geringfügig. Das Material kann sich jedoch in der Hilfsnut entlasten und wird von der Hilfsnutschneide 25 voll abgetragen. Sofern elastisches Material gebohrt werden soll, liegen die symmetrischen Querschneiden in gleicher Höhe wie die Hilfsnutschneide des Bohrwerkzeugs.

Für die Bearbeitung von Metall bzw. nicht elastischem Material müssen die symmetrischen Querschneiden 24 gegenüber der Hilfsnutschneide 25 geringfügig axial zurückversetzt sein, damit immer die Hilfsnutschneide 25 zuerst wirksam ist. Die Hilfsnutschneide muß in diesem Fall immer oberster Punkt des Bohrwerkzeugs sein.

ANSPRÜCHE

1.    Mehrlippenbohrer zur Bearbeitung von Leiterplatten, Kunststoffen oder Metallen, insbesondere für Bohrwerkzeuge mit einem Durchmesser von 0,4 bis 0,8 mm, mit einer, in einer Hauptspannut eingebrachten, parallel zu dieser verlaufenden zusätzlichen Hilfsnut zum Abführen von Spangut, dadurch gekennzeichnet, daß in einer Hauptspannut eines drei-schneidigen Mehrlippenbohrers eine Hilfsspannut (19) derart eingebracht ist, daß sich die Tiefe der Hilfsspannut (19) bis etwa zur Mittelachse (20) des Bohrers (10) hin erstreckt.

2.    Bohrer nach Anspruch, dadurch gekennzeichnet, daß die Tiefe der Hilfsnut (19) sich mindestens bis 1/10 des Bohrerdurchmessers (10) vor der Mittelachse (20) des Bohrers (10) erstreckt.

3.    Bohrer nach einem oder mehreren der vorhergehenden Ansprüche, dadurch gekennzeichnet, daß die Hilfsnut (19) im Querschnitt kreisbogenförmig mit Radius r ausgebildet ist, mit sanften Übergängen (21) zur Hauptspannut (17), die einen gleichbleibenden Radius R aufweist.

4.    Bohrer nach einem oder mehreren der vorhergehenden Ansprüche, dadurch gekennzeichnet, daß das Verhältnis der Radien r : R etwa 1: 3 bis 1: 4 beträgt.

5.    Bohrer nach einem oder mehreren der vorhergehenden Ansprüche, dadurch gekennzeichnet, daß symmetrischen Querschneiden 24 der Hauptschneiden im Bereich der Bohrerspitze gegenüber der Hilfsnutschneide axial gleich oder axial zurückversetzt sind.

Fig 1

Fig 2

Fig 3